# EUROPEAN PATENT APPLICATION

(11) **EP 4 603 864 A1**
(43) Date of publication of application: **20.08.2025**
(21) Application number: 24809545.7
(22) Date of filing: 29.08.2024
(51) Int. Cl.: G01S 5/02

(54) **TERMINAL DEVICE, POSITION ACQUISITION METHOD, AND RECORDING MEDIUM**

(30) Priority: 27.12.2023 JP 2023220751
(71) Applicant: Exevita, Inc., Kamakura-shi, Kanagawa 248-0007 (JP)
(72) Inventor: TADA, Hiroshi, Kanagawa 2480007 (JP); ANZAI, Yohei, Kanagawa 2480007 (JP)
(74) Representative: Betten & Resch
(86) International application number: PCT/JP2024/030874
(87) International publication number: WO 2025/141962

(57) **Abstract**

With conventional technologies, it is not easy to acquire the position of a terminal apparatus indoors, for example. By using a terminal apparatus including: a reception unit 13 configured to receive, from each communication apparatus of three or more communication apparatuses, a radio wave containing an apparatus identifier identifying the communication apparatus; an intensity acquisition unit 141 configured to acquire time-series radio wave intensities for each communication apparatus of the three or more communication apparatuses; a type judgment unit 142 configured to judge, for each communication apparatus of the three or more communication apparatuses, whether the communication apparatus is a fixed terminal that is fixed or a mobile terminal that is moving, using the time-series radio wave intensities acquired by the intensity acquisition unit 141; a position acquisition unit configured to acquire radio wave intensities of three or more communication apparatuses judged to be fixed terminals by the type judgment unit 142, and to acquire a terminal position that is position information regarding the terminal apparatus indoors, for example, using the radio wave intensities of the fixed terminals; and a position output unit that outputs the terminal position acquired by the position acquisition unit, it is possible to easily acquire the position of the terminal apparatus indoors, for example.

## Description

### Technical field

The present invention relates to a terminal apparatus and so on that acquire and output the position of the terminal apparatus.

### Background Art

Conventionally, there has been an indoor position detection apparatus capable of detecting the position of an object indoors (see Patent Document 1). Such an apparatus is an indoor position detection apparatus that includes multiple ranging sensors arranged at intervals indoors, and an object detection unit that detects the movement of an object based on detection signals from the ranging sensors.

### Citation List

### Patent Document

Patent Document 1: JP 2023-136586A

### Summary of Invention

### Technical Problem

However, with the conventional technique, it is necessary to install multiple ranging sensors indoors, and it is not easy to acquire the position of the terminal apparatus indoors.

### Solution to Problem

A terminal apparatus according to a first aspect of the present invention is a terminal apparatus including: a reception unit configured to receive, from each communication apparatus of three or more communication apparatuses, a radio wave containing an apparatus identifier identifying the communication apparatus; an intensity acquisition unit configured to acquire time-series radio wave intensities for each communication apparatus of the three or more communication apparatuses; a type judgment unit configured to judge, for each communication apparatus of the three or more communication apparatuses, whether the communication apparatus is a fixed terminal that is fixed or a mobile terminal that is moving, using the time-series radio wave intensities acquired by the intensity acquisition unit; a position acquisition unit configured to acquire a terminal position that is position information regarding the terminal apparatus, using radio wave intensities of three or more communication apparatuses judged to be fixed terminals by the type judgment unit; and a position output unit configured to output the terminal position acquired by the position acquisition unit.

With such a configuration, it is possible to easily acquire the position of the terminal apparatus indoors, for example.

A terminal apparatus according to a second aspect of the present invention is the terminal apparatus according to the first aspect of the invention, wherein the position acquisition unit includes: an intensity acquisition part configured to acquire the radio wave intensities of the three or more communication apparatuses judged to be fixed terminals by the type judgment unit, in association with apparatus identifiers thereof; a location determination part configured to determine one or more pieces of location information that meet radio wave intensities associated with the three or more apparatus identifiers, acquired by the intensity acquisition part, and a similarity condition, from a location information storage unit that stores three or more pieces of location information each containing position information regarding a specific location and radio wave intensities at the specific location for each of apparatus identifiers of two or more fixed terminals; and a position acquisition part configured to acquire one or more pieces of position information respectively contained in the one or more pieces of location information determined by the location determination part, and to acquire the terminal position, using the one or more pieces of position information.

With such a configuration, it is possible to easily acquire the position of the terminal apparatus indoors, for example.

A terminal apparatus according to a third aspect of the present invention is the terminal apparatus according to the second aspect of the invention, wherein the three or more pieces of location information in the location information storage unit are pieces of information acquired by a location information production apparatus, and the location information production apparatus includes: a position acceptance unit configured to accept position information regarding a specific location; a reception unit configured to receive, from each communication apparatus of three or more communication apparatuses, a radio wave containing an apparatus identifier identifying the communication apparatus, at the specific location; an intensity acquisition unit configured to acquire time-series radio wave intensities for each communication apparatus of the three or more communication apparatuses; a type judgment unit configured to judge, for each communication apparatus of the three or more communication apparatuses, whether the communication apparatus is a fixed terminal that is fixed or a mobile terminal that is moving, using the time-series radio wave intensities acquired by the intensity acquisition unit; and an accumulation unit configured to form and accumulate location information containing apparatus identifiers and radio wave intensities of three or more communication apparatuses judged to be fixed terminals by the type judgment unit and the position information regarding the specific location.

With such a configuration, it is possible to easily acquire the position of the terminal apparatus indoors, for example.

A terminal apparatus according to a fourth aspect of the present invention is the terminal apparatus according to the first aspect of the invention, further including: a movement judgment unit configured to judge whether the terminal apparatus is moving or stopped, and to acquire a movement judgment result, which is the result of the judgment, and the position acquisition unit uses the movement judgment result to acquire the position information.

With such a configuration, it is possible to easily acquire the position of the terminal apparatus indoors, for example.

A terminal apparatus according to a fifth aspect of the present invention is the terminal apparatus according to the fourth aspect of the invention, wherein the movement judgment unit acquires sensor information of the terminal apparatus, and uses the sensor information to acquire the movement judgment result.

With such a configuration, it is possible to easily acquire the position of the terminal apparatus indoors, for example.

A terminal apparatus according to a sixth aspect of the present invention is the terminal apparatus according to the fourth aspect of the invention, wherein, using the time-series radio wave intensities of each of the three or more communication apparatuses acquired by the intensity acquisition unit, the movement judgment unit judges that the terminal apparatus is stopped if the time-series radio wave intensities of two or more communication apparatuses have not changed, and to acquire the movement judgment result.

With such a configuration, it is possible to easily acquire the position of the terminal apparatus indoors, for example.

A location information production apparatus according to a seventh aspect of the present invention is a location information production apparatus including: a position acceptance unit configured to accept position information regarding a specific location; a reception unit configured to receive, from each communication apparatus of three or more communication apparatuses, a radio wave containing an apparatus identifier identifying the communication apparatus, at the specific location; an intensity acquisition unit configured to acquire time-series radio wave intensities for each communication apparatus of the three or more communication apparatuses; a type judgment unit configured to judge, for each communication apparatus of the three or more communication apparatuses, whether the communication apparatus is a fixed terminal that is a fixed communication apparatus or a mobile terminal that is a moving communication apparatus, using the time-series radio wave intensities acquired by the intensity acquisition unit; an accumulation unit configured to form and accumulate location information containing apparatus identifiers and radio wave intensities of three or more communication apparatuses judged to be fixed terminals by the type judgment unit and the position information regarding the specific location.

With such a configuration, it is possible to acquire location information used to acquire the position of the terminal apparatus indoors, for example.

### Advantageous Effects of Invention

With the terminal apparatus according to the present invention, it is possible to easily acquire the position of the terminal apparatus.

### Brief Description of Drawings

FIG. 1 is a conceptual diagram for an information system A that includes a location information production apparatus 1 according to a first embodiment.
FIG. 2 is a block diagram for the location information production apparatus 1 according to the same.
FIG. 3 is a flowchart illustrating examples of operations of the location information production apparatus 1 according to the same.
FIG. 4 is a flowchart illustrating an example of time-series intensity acquisition processing according to the same.
FIG. 5 is a flowchart illustrating an example of fixed information acquisition processing according to the same.
FIG. 6 is a flowchart illustrating an example of type judgment processing according to the same.
FIG. 7 is a diagram for a time series radio wave intensity management table according to the same.
FIG. 8 is a diagram for a location information management table according to the same.
FIG. 9 is a conceptual diagram for an information system C according to a second embodiment.
FIG. 10 is a block diagram for a terminal apparatus 2 according to the same.
FIG. 11 is a flowchart illustrating a first operation example of the terminal apparatus 2 according to the same.
FIG. 12 is a flowchart illustrating an example of movement judgment processing according to the same.
FIG. 13 is a flowchart illustrating an example of position estimation processing according to the same.
FIG. 14 is a flowchart illustrating a second operation example of the terminal apparatus 2 according to the same.
FIG. 15 is a flowchart illustrating a second example of type judgment processing according to the same.
FIG. 16 is a block diagram for a computer system according to the above embodiments.

### Description of Embodiments

Hereinafter, embodiments of a terminal apparats and so on will be described with reference to the drawings. Note that in the embodiments, constituent elements with the same reference signs perform similar operations, and therefore, repeated descriptions thereof may be omitted.

### First Embodiment

The present embodiment describes a location information production apparatus. The location information production apparatus is an apparatus that acquires location information, which will be described later, of a specific location.

Note that in the present description, the fact that information X is associated with information Y means that information Y can be acquired from information X, or that information X can be acquired from information Y, and the method for association is not limited. For example, information X and information Y may be linked or exist in the same buffer, information X may be included in information Y, or information Y may be included in information X.

In addition, in this specification, selecting or determining information Z means, for example, acquiring information Z, acquiring a pointer to information Z, acquiring the ID of information Z, setting a flag for information Z, and it is only required that information Z be accessible.

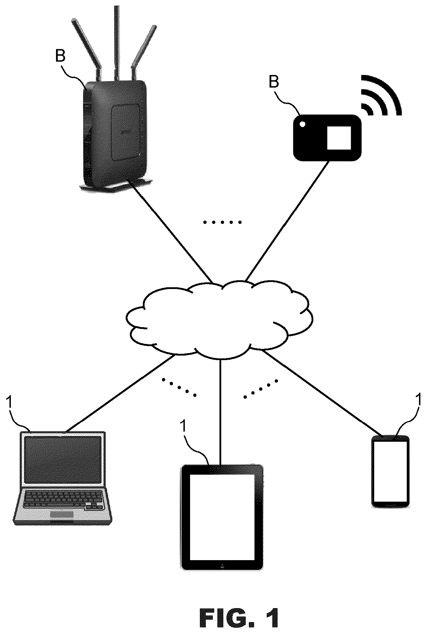

FIG. 1 is a conceptual diagram for an information system A that includes a location information production apparatus 1 according to the present embodiment. The information system A includes the location information production apparatus 1 and three or more communication apparatuses B.

Each of the three or more communication apparatuses B is an apparatus that transmits radio waves to another apparatus such as the location information production apparatus 1. The communication apparatus B transmits an apparatus identifier that identifies the communication apparatus B to another apparatus. The communication apparatus B may be, for example, a Wi-fi router or a communication apparatus using BLE (Bluetooth Low Energy), but there is no limitation.

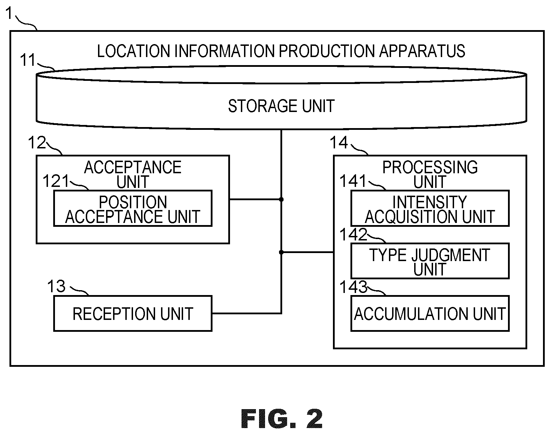

FIG. 2 is a block diagram for the location information production apparatus 1 according to the present embodiment. The location information production apparatus 1 includes a storage unit 11, an acceptance unit 12, a reception unit 13, and a processing unit 14. The acceptance unit 12 includes a position acceptance unit 121. The processing unit 14 includes an intensity acquisition unit 141, a type judgment unit 142, and an accumulation unit 143.

The acceptance unit 12 accepts various instructions and information. Examples of the various instructions and information include position information, which will be described later. Any input means, such as a touch panel, a keyboard, a mouse, a menu screen, or the like, may be employed to input various instructions and information.

The position acceptance unit 121 accepts position information regarding a specific location. The position acceptance unit 121 typically accepts position information regarding each of three or more specific locations. For example, the position acceptance unit 121 accepts position information input from a user. For example, the position acceptance unit 121 reads out position information from the storage unit 11.

The specific location is a specific indoor location, but may also be a specific outdoor location. Here, the position information is information that specifies an indoor or outdoor position. For example, the position information is three-dimensional coordinate values (x,y,z) indicating a relative indoor or outdoor position, but may also be two-dimensional coordinate values (x,y). Note that there is no limitation on the origin of the coordinate values that specify a relative indoor or outdoor position. It is preferable that the specific outdoor location is a location where GPS signals are difficult to reach, such as among high-rise buildings or in a forest, but there is no limitation thereon. The position information may be information (for example, a character string) or an ID that allows a person to recognize a location. Such position information may be, for example, labels such as "living room," "work room," "conference room," "east side of the library," "toy section of the department store," and the like.

The position acceptance unit 121 may generate a unique ID. Such a unique ID may be considered as a label and position information.

The position acceptance unit 121 does not have to receive position information. In such a case, the position acceptance unit 121 is unnecessary.

The reception unit 13 receives radio waves containing apparatus identifiers from three or more communication apparatuses B at a specific location. The reception unit 13 typically successively receives radio waves containing apparatus identifiers from three or more communication apparatuses B.

The apparatus identifiers are pieces of information that respectively identify the communication apparatuses B. The apparatus identifiers are, for example, the respective IDs of the communication apparatuses B or the respective names of the communication apparatuses B. The reception of radio waves may be considered as the reception of information.

The processing unit 14 performs various kinds of processing. The various kinds of processing are, for example, the processing performed by the intensity acquisition unit 141, the type judgment unit 142, and the accumulation unit 143.

The intensity acquisition unit 141 acquires, for each of the three or more communication apparatuses B, the intensity of the radio wave received from the communication apparatus B. The intensity acquisition unit 141 acquires the radio wave intensity in a pair with the apparatus identifier of the communication apparatus B. The intensity acquisition unit 141 acquires time-series radio wave intensities. "Time-series radio wave intensities" means two or more radio wave intensities that are consecutive in time. It is understood that "consecutive in time" means that there may be time intervals.

The type judgment unit 142 judges whether or not each of the three or more communication apparatuses B is a fixed terminal or a mobile terminal, using the time-series radio wave intensities acquired by the intensity acquisition unit 141. The fixed terminal is a communication apparatus whose installation position is fixed. The mobile terminal is a communication apparatus whose installation position is not fixed and that is moving.

For example, the type judgment unit 142 acquires the degree of variation of two or more radio wave intensities that are paired with one apparatus identifier and are consecutive in a time series, and if the degree of variation is not less than a threshold value or greater than a threshold value, the type judgment unit 142 judges that the communication apparatus B identified by the one apparatus identifier is a mobile terminal. For example, the type judgment unit 142 acquires the degree of variation of two or more time-series radio wave intensities that are paired with one apparatus identifier and are consecutive in time, and if the degree of variation is not greater than a threshold value or less than a threshold value, the type judgment unit 142 judges that the communication apparatus B identified by the one apparatus identifier is a fixed terminal.

Note that the degree of variation is information indicating the degree of variation or change in the time-series radio wave intensities. The degree of variation is, for example, a variance, a standard deviation, or a number based on a difference (for example, a difference, or a value obtained by adding the differences between any two radio wave intensities among the three or more radio wave intensities that are consecutive in time).

For example, if a number that is the number of radio wave intensities acquired in a predetermined period of time and that is the number of time-series radio wave intensities consecutive in time and paired with one apparatus identifier, is not greater than a threshold value or less than a threshold value, the type judgment unit 142 judges that the communication apparatus B identified by the one apparatus identifier is a mobile terminal.

The accumulation unit 143 forms and accumulates location information that contains the apparatus identifier and the radio wave intensity of the communication apparatuses B judged to be a fixed terminal by the type judgment unit 142. It is preferable that the accumulation unit 143 forms and accumulates location information that contains an apparatus identifier and a radio wave intensity for each of the three or more communication apparatuses B.

The accumulation unit 143 forms and accumulates location information that contains the apparatus identifier and the radio wave intensity of the communication apparatus B judged to be a fixed terminal by the type judgment unit 142. It is preferable that the accumulation unit 143 forms and accumulates location information that contains an apparatus identifier, a radio wave intensity, and position information regarding a specific location for each of the three or more communication apparatuses B. The accumulation unit 143 accumulates location information in the storage unit 11, for example, but may accumulate it in another apparatus. It is preferable that location information contains position information, but it does not have to contain position information. Location information may only contain an apparatus identifier and a radio wave intensity.

The radio wave intensity accumulated in the accumulation unit 143 is typically a representative value of the time-series radio wave intensities of the radio waves from the communication apparatus B. The representative value is, for example, the median, average, maximum value, or minimum value.

It is preferable that the storage unit 11 is realized using a non-volatile recording medium, but it can be realized using a volatile recording medium.

There is no limitation on the process in which information is stored in the storage unit 11. For example, information may be stored in the storage unit 11 via a recording medium, or information transmitted via a communication line or the like may be stored in the storage unit 11, or information input via an input device may be stored in the storage unit 11.

The acceptance unit 12 and the position acceptance unit 121 can be realized using a device driver for the input means such as a touch panel or a keyboard, or control software or the like for controlling the menu screen.

The reception unit 13 is typically realized using a wireless or wired communication means.

The processing unit 14, the intensity acquisition unit 141, the type judgment unit 142, and the accumulation unit 143 can typically be realized using a processor, a memory, or the like. The processing procedures performed by the processing unit 14 and so on are typically realized using software, and the software is recorded on a recording medium such as a ROM. However, such processing procedures may be realized using hardware (a dedicated circuit). Note that the processor may be a CPU, an MPU, a GPU, or the like, and there is no limitation on the type thereof.

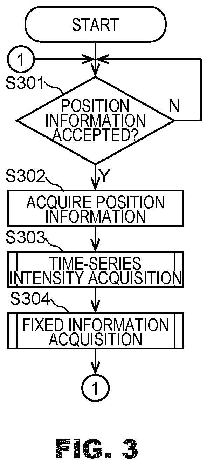

Next, examples of operations of the location information production apparatus 1 will be described with reference to the flowchart in FIG. 3.

(Step S301) The position acceptance unit 121 judges whether or not position information regarding a specific location has been accepted. If position information has been accepted, processing proceeds to step S302, and if position information has not been accepted, processing returns to step S301.

(Step S302) The accumulation unit 143 acquires the position information accepted in step S301.

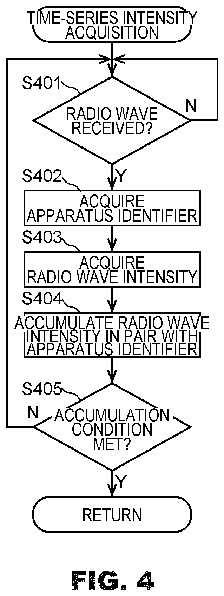

(Step S303) The processing unit 14 and so on perform time-series intensity acquisition processing. Time-series intensity acquisition processing is processing performed to acquire time-series radio wave intensities of radio waves from each of three or more communication apparatuses B. An example of time-series intensity acquisition processing will be described with reference to the flowchart in FIG. 4.

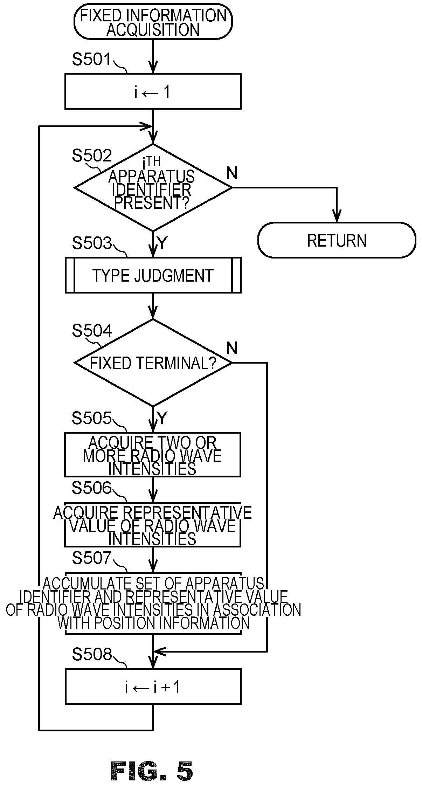

(Step S304) The processing unit 14 and so on perform fixed information acquisition processing. Processing returns to step S301. Fixed information acquisition processing is processing performed to acquire a radio wave intensity from a fixed terminal at the location specified by the position information accepted in step S301. An example of fixed information acquisition processing will be described with reference to the flowchart in FIG. 5.

It is preferable that, in the flowchart in FIG. 3, the user holding the location information production apparatus 1 moves to each of the three or more specific locations, and the location information production apparatus 1 accepts location information for each of the three or more specific locations, and repeatedly performs the processing in S301 to S304.

In the flowchart shown in FIG. 3, processing is terminated when power is turned off or an interruption is made to terminate the processing.

Next, an example of the time-series intensity acquisition processing in step S303 will be described with reference to the flowchart in FIG. 4.

(Step S401) The reception unit 13 judges whether or not a radio wave has been received from any of the communication apparatuses B. If a radio wave has been received, processing proceeds to step S402, and otherwise processing returns to step S401.

(Step S402) The accumulation unit 143 acquires an apparatus identifier corresponding to the radio wave received in step S401.

(Step S403) The intensity acquisition unit 141 acquires the intensity of the radio wave received in step S401.

(Step S404) The accumulation unit 143 accumulates the radio wave intensity acquired in step S403 in a buffer (not shown) in association with the apparatus identifier acquired in step S402.

(Step S405) The accumulation unit 143 judges whether or not a location information accumulation condition is met. If the accumulation condition is met, processing returns to high level processing, and otherwise processing returns to step S401. The accumulation condition is, for example, that a threshold time or more has elapsed from the reception of the location information regarding the specific location, that a threshold number or more of radio wave intensities paired with three or more apparatus identifiers have been accumulated, or the like.

Next, an example of the fixed information acquisition processing in step S304 will be described with reference to the flowchart in FIG. 5.

(Step S501) The type judgment unit 142 substitutes 1 for a counter i.

(Step S502) The type judgment unit 142 judges whether or not an i^{th} apparatus identifier is present in a buffer (not shown). If the i^{th} apparatus identifier is present, processing proceeds to step S503, and if the i^{th} apparatus identifier is not present, processing returns to higher level processing.

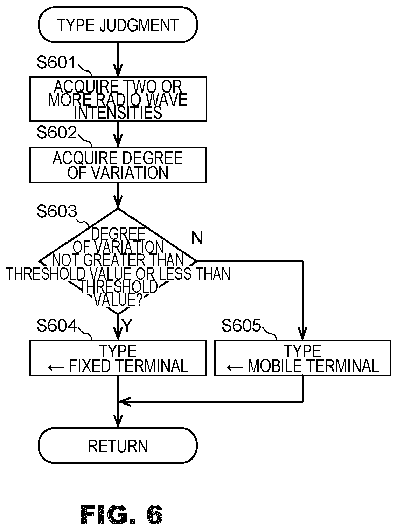

(Step S503) The type judgment unit 142 judges the type of the communication apparatuses B identified by the i^{th} apparatus identifier. An example of such type judgment processing will be described with reference to the flowchart in FIG. 6.

(Step S504) If the result of the judgment in step S503 is "fixed terminal", processing proceeds to step S505, and if the result of the judgment is "mobile terminal", the processing proceeds to step S508.

(Step S505) The accumulation unit 143 acquires two or more radio wave intensities paired with the i^{th} apparatus identifier from a buffer (not shown).

(Step S506) The accumulation unit 143 acquires a representative value of the two or more radio wave intensities.

(Step S507) The accumulation unit 143 accumulates the set of the i^{th} apparatus identifier and the representative value of the radio wave intensities acquired in step S506 in the storage unit 11 in association with the position information accepted in step S301.

(Step S508) The type judgment unit 142 increments the counter i by 1. Processing returns to step S502.

Note that, in the flowchart in FIG. 5, the accumulation unit 143 may newly acquire the latest radio wave intensity in step S506 instead of the representative value of the two or more radio wave intensities.

Next, an example of the type judgment processing in step S503 will be described with reference to the flowchart in FIG. 6.

(Step S601) The type judgment unit 142 acquires the two or more radio wave intensities paired with the i^{th} apparatus identifier in step S502 from a buffer (not shown).

(Step S602) The type judgment unit 142 acquires the degree of variation in the two or more radio wave intensities acquired in step S601.

(Step S603) The type judgment unit 142 judges whether or not the degree of variation acquired in step S602 is not greater than a threshold value or less than a threshold value. If the degree of variation is not greater than the threshold value or less than the threshold value, processing proceeds to step S604, and if the degree of variation is not less than the threshold value or greater than the threshold value, processing proceeds to step S605.

(Step S604) The type judgment unit 142 judges that the type of the communication apparatus B is "fixed terminal". Processing returns to higher level processing.

(Step S605) The type judgment unit 142 judges that the type of the communication apparatus B is "mobile terminal". Processing returns to higher level processing.

Hereinafter, examples of specific operations of the location information production apparatus 1 according to the present embodiment will be described. Here, it is assumed that the accumulation condition is that a predetermined time (for example, three minutes) has elapsed since the location information regarding the specific location was accepted.

It is assumed that, for example, a user A is in a certain place indoors (for example, the user A's home or a department store that the user A often visits). It is assumed that the user A thereafter inputs position information (x₁,y₁) to the location information production apparatus 1.

Next, the position acceptance unit 121 of the location information production apparatus 1 accepts the position information (x₁,y₁) regarding the specific location. Next, the accumulation unit 143 acquires the accepted position information (x₁,y₁) into a buffer (not shown).

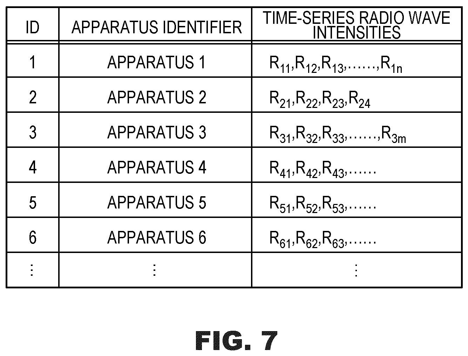

Thereafter, the reception unit 13 receives a radio wave that contains an apparatus identifier from each of three or more communication apparatuses B during a predetermined period of time (for example, three minutes). Thereafter, the accumulation unit 143 acquires the apparatus identifier contained in the received radio wave. In addition, the intensity acquisition unit 141 acquires the intensity of the received radio wave. Next, the accumulation unit 143 adds the acquired radio wave intensity to a buffer (not shown) in association with the acquired apparatus identifier. As a result, the time series radio wave intensity management table shown in FIG. 7 is formed in the buffer (not shown). The time series radio wave intensity management table shown in FIG. 7 is a table at the specific location indicated by the position information (x₁,y₁).

The time series radio wave intensity management table is a table for managing time-series radio wave intensities for each communication apparatus B. The time series radio wave intensity management table is a table for managing two or more records each containing "ID", "apparatus identifier", and "time-series radio wave intensities." The "ID" is information identifying a record. The "time-series radio wave intensities" are radio wave intensities that are consecutive in time. "R₁₁", "R₁₂", "R₂₁", and so on are radio wave intensities.

After the management table in FIG. 7 is formed, the accumulation unit 143 judges that the accumulation condition for the location information is met because a predetermined period of time (for example, 3 minutes) has elapsed since the position information (x₁,y₁) regarding the specific location was accepted by the position acceptance unit 121.

Next, the type judgment unit 142 acquires the degree of variation in the time-series radio wave intensities for each record in FIG. 7, and judges whether each communication apparatus B is a fixed terminal or a mobile terminal according to the flowchart in FIG. 6. It is assumed that the type judgment unit 142 thereafter judges that the communication apparatuses B identified by the apparatus identifiers "apparatus 1, apparatus 3, apparatus 4, apparatus 6, ..." are fixed terminals, and the communication apparatuses B identified by the apparatus identifiers "apparatus 2, apparatus 5, ..." are mobile terminals.

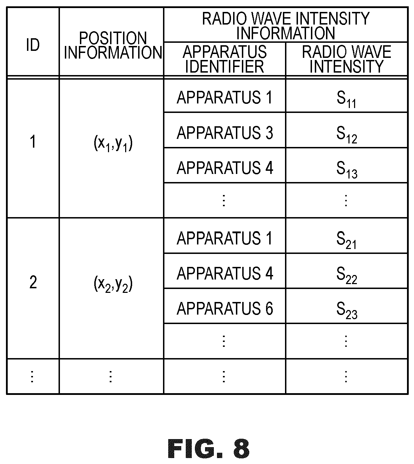

Next, the accumulation unit 143 forms radio wave intensity information by pairing the apparatus identifier of each of the communication apparatuses B that are fixed terminals with the representative value of the radio wave intensities corresponding thereto. Thereafter, the accumulation unit 143 accumulates each of the multiple pieces of radio wave intensity information in association with the position information (x₁,y₁). Through such processing, the record with "ID = 1" in the location information management table in FIG. 8 is formed. Note that the accumulation unit 143 may only accumulate apparatus identifiers and radio wave intensities. In such a case, each record in FIG. 8 does not contain position information. In addition, in such a case, the position acceptance unit 121 does not need to accept position information regarding the specific location.

The location information management table is a table for managing location information. The location information management table stores multiple records associated with pieces of position information and each containing "ID", "apparatus identifier", and "radio wave intensity information". "Radio wave intensity" contains "apparatus identifier" and "radio wave intensity".

Through the above processing, the location information at the specific location 1 indicated by the position information (x₁,y₁) is accumulated.

The user A moves to a specific location 2 at the position indicated by position information (x₂,y₂) while holding the location information production apparatus 1, and performs the same processing as above. As a result, the location information production apparatus 1 forms and accumulates the record with "ID = 2" in the location information management table in FIG. 8. Furthermore, the user A moves to each of one or more specific locations, including a specific location 3 while holding the location information production apparatus 1, and performs the same processing as above. As a result, the location information production apparatus 1 forms and accumulates the records with "ID = 3" and the following IDs (not shown) in the location information management table in FIG. 8.

As described above, according to the present embodiment, it is possible to acquire location information used to acquire the positions of the terminal apparatuses indoors. That is to say, according to the present embodiment, it is possible to produce three or more pieces of location information used to acquire the positions of terminal apparatuses indoors.

Note that the processing in the present embodiment may be realized using software. This software may be distributed through software downloading or the like. Also, this software may be recorded on a recording medium such as a CD-ROM and distributed. Note that the same applies to the other embodiments in the present description. Note that the software that realizes the location information production apparatus 1 according to the present embodiment is the program described below. That is to say, this program is a program that enables a computer to function as: a position acceptance unit configured to accept position information regarding a specific location; a reception unit configured to receive, from each communication apparatus of three or more communication apparatuses, a radio wave containing an apparatus identifier identifying the communication apparatus; an intensity acquisition unit configured to acquire time-series radio wave intensities for each communication apparatus of the three or more communication apparatuses; a type judgment unit configured to judge, for each communication apparatus of the three or more communication apparatuses, whether or not the communication apparatus is a fixed terminal that is a fixed communication apparatus or a mobile terminal that is a moving communication apparatus, using the time-series radio wave intensities acquired by the intensity acquisition unit; and an accumulation unit configured to form and accumulate location information containing apparatus identifiers and radio wave intensities of three or more communication apparatuses judged to be fixed terminals by the type judgment unit and the position information regarding the specific location.

### Second Embodiment

The present embodiment describes a terminal apparatus that receives radio waves from three or more communication apparatuses B, judges the type of each communication apparatus B, using time-series radio wave intensities, and acquires and outputs a terminal position indicating the position of the terminal apparatus indoors, using radio wave intensities from only the communication apparatuses B of the "fixed terminal" type.

The present embodiment also describes a terminal apparatus that judges whether the terminal apparatus is moving or stopped, and acquires and outputs the terminal position using the determination result.

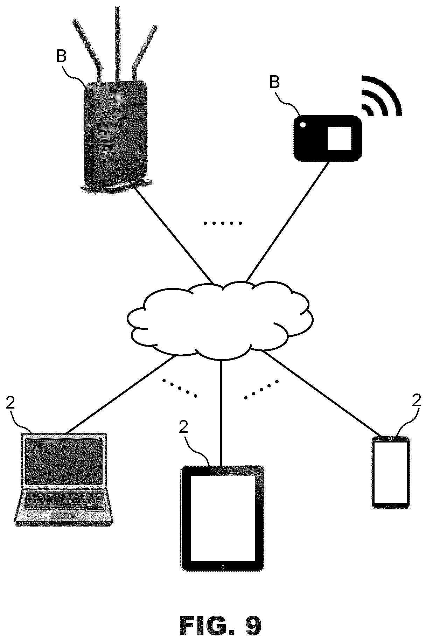

FIG. 9 is a conceptual diagram for an information system C according to the present embodiment. The information system C includes one or more terminal apparatuses 2 and three or more communication apparatuses B.

The terminal apparatuses 2 are terminals that can acquire indoor position information. Each terminal apparatus 2 is, for example, a smart phone, a tablet terminal, a smart watch, a so-called personal computer, or the like, and there is no limitation on the type thereof.

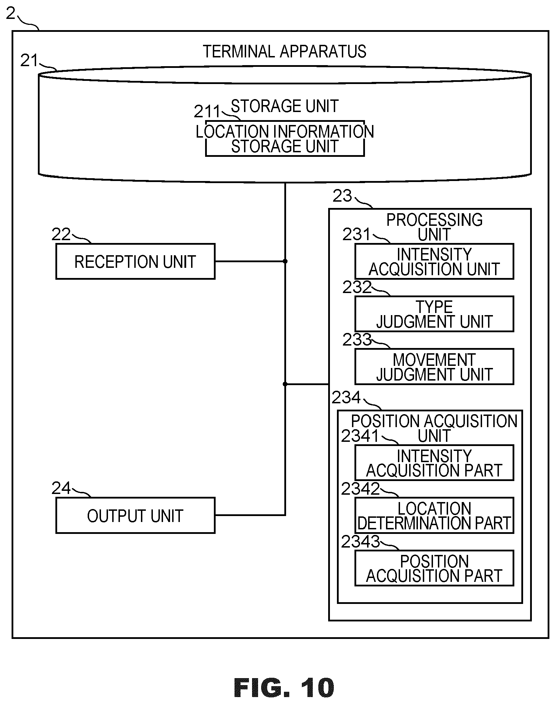

FIG. 10 is a block diagram for each terminal apparatus 2 according to the present embodiment. Each terminal apparatus 2 includes a storage unit 21, a reception unit 22, a processing unit 23, and an output unit 24. The storage unit 21 includes a location information storage unit 211. The processing unit 23 includes an intensity acquisition unit 231, a type judgment unit 232, a movement judgment unit 233, and a position acquisition unit 234. The position acquisition unit 234 includes an intensity acquisition part 2341, a location determination part 2342, and a position acquisition part 2343. The output unit 24 includes a position output unit 241.

The storage unit 21 stores various kinds of information. Examples of the various kinds of information include location information, which will be described later.

The location information storage unit 211 stores three or more pieces of location information. It is preferable that the three or more pieces of location information in the location information storage unit 211 are pieces of information accumulated by the location information production apparatus 1.

For example, each of the three or more pieces of location information in the location information storage unit 211 contains position information regarding a specific location, an apparatus identifier, and a radio wave intensity. It is preferable that each of the three or more pieces of position information is associated with three or more pieces of radio wave intensity information. Radio wave intensity information contains an apparatus identifier and a radio wave intensity. The three or more pieces of radio wave intensity information may constitute a radio wave intensity vector. The radio wave intensity vector is a vector using radio wave intensity information, and has a structure represented by (the radio wave intensity with the apparatus identifier 1, the radio wave intensity with the apparatus identifier 2, the radio wave intensity with the apparatus identifier 3, ..., the radio wave intensity with the apparatus identifier n). The location information storage unit 211 stores, for example, a location information management table having the structure shown in FIG. 8.

Each terminal apparatus 2 does not need to include the location information storage unit 211. In such a case, each terminal apparatus 2 references the location information storage unit 211 of an external apparatus (not shown) to acquire a terminal position, which will be described later.

The reception unit 22 receives, from each of three or more communication apparatuses B, a radio wave containing an apparatus identifier that identifies the communication apparatus B. The reception unit 22 typically has the same function as the above reception unit 13. The reception unit 22 typically receives radio waves containing apparatus identifiers from three or more communication apparatuses B. The reception unit 22 typically successively receive radio waves.

The processing unit 23 performs various kinds of processing. The various kinds of processing are, for example, the processing performed by the intensity acquisition unit 231, the type judgment unit 232, the movement judgment unit 233, and the position acquisition unit 234.

The intensity acquisition unit 231 acquires time-series radio wave intensities for each of the three or more communication apparatuses B. The intensity acquisition unit 231 acquires radio wave intensities based on the radio waves received by the reception unit 22. Note that the intensity acquisition unit 231 has the same function as the above intensity acquisition unit 141.

The type judgment unit 232 judges whether or not each of the three or more communication apparatuses B is a fixed terminal or a mobile terminal, using the time-series radio wave intensities acquired by the intensity acquisition unit 231. The type judgment unit 232 has the same function as the above type judgment unit 142.

The movement judgment unit 233 judges whether the terminal apparatus 2 is moving or stopped, and acquires a movement judgment result, which is the result of the judgment. The movement judgment result is, for example, "moving" or "stopped".

The movement judgment unit 233 acquires, for example, sensor information of the terminal apparatus 2, and use the sensor information to acquire the movement judgment result. The sensor information is, for example, acceleration measured by a gyro or time series position information.

For example, if the acceleration acquired by the gyro is "0" or not greater than a threshold value, the movement judgment unit 233 acquires the movement judgment result "stopped". If the acceleration acquired by the gyro is not less than a threshold value or greater than a threshold value, the movement judgment unit 233 acquires the movement judgment result "moving".

For example, using the time-series radio wave intensities of the three or more communication apparatuses B acquired by the intensity acquisition unit 231, the movement judgment unit 233 judges that the terminal apparatus is stopped if there is no change in the time-series radio wave intensities of one or more communication apparatuses B, and acquires a movement judgment result "stopped."

The position acquisition unit 234 acquires the radio wave intensities of three or more communication apparatuses B judged to be fixed terminals by the type judgment unit 232, and acquires terminal position, which is position information regarding the terminal apparatus 2 indoors, using the radio wave intensities of the fixed terminals.

For example, the position acquisition unit 234 acquires the radio wave intensities of three or more communication apparatuses B determined to be fixed terminals by the type judgment unit 232, references three or more pieces of location information in the location information storage unit 211, using the three or more radio wave intensities, and acquires the terminal position, using the fingerprinting method.

It is preferable that the position acquisition unit 234 uses the movement judgment result to acquire the position information. For example, it is preferable that the position acquisition unit 234 acquires the terminal position only when the movement judgment result indicates that the terminal apparatus is "stopped".

The position acquisition unit 234 may acquire the terminal position only when the apparatus identifier corresponding to the radio waves received by the reception unit 22 is contained in the location information in the location information storage unit 211, using the location information containing the apparatus identifier. This is because the location information in the location information storage unit 211 is location information regarding a fixed terminal.

The intensity acquisition part 2341 acquires the radio wave intensities of the three or more communication apparatuses judged to be fixed terminals by the type judgment unit 232, in association with the apparatus identifiers.

The location determination part 2342 determines, from among the pieces of location information in the location information storage unit 211, one or more pieces of location information that meet radio wave intensities associated with the three or more apparatus identifiers, acquired by the intensity acquisition part 2341, and a similarity condition.

For example, the location determination part 2342 acquires a first signal intensity vector, which is a vector having as elements the radio wave intensities paired with the three or more apparatus identifiers contained in the location information. In addition, for example, the location determination part 2342 acquires a second radio wave intensity vector, which is a vector having as elements the radio wave intensities associated with the three or more apparatus identifiers acquired by the intensity acquisition part 2341. For example, the location determination part 2342 acquires the degree of similarity between the two radio wave intensity vectors, and acquires the location information corresponding to the first radio wave intensity vector if the degree of similarity is not less than a threshold value or greater than a threshold value.

The position acquisition part 2343 acquires one or more pieces of position information respectively contained in the one or more pieces of location information determined by the location determination part 2342, and acquires the terminal position using one or more pieces of position information.

The output unit 24 outputs various kinds of information. Examples of the various kinds of information here include a terminal position and an indoor map.

Here, "output" is a concept that encompasses displaying on a display screen, projection using a projector, printing by a printer, the output of a sound, transmission to an external apparatus, accumulation on a recording medium, delivery of a processing result to another processing apparatus or another program, and the like.

The position output unit 241 outputs the terminal position acquired by the position acquisition unit 234. For example, the position output unit 241 displays, on an indoor map, a design clearly indicating the position specified by the terminal position.

It is preferable that the storage unit 21 and the location information storage unit 211 are realized using a non-volatile recording medium, but it can be realized using a volatile recording medium.

There is no limitation on the process in which information is stored in the storage unit 21 or the like. For example, information may be stored in the storage unit 21 or the like via a recording medium, or information transmitted via a communication line or the like may be stored in the storage unit 21 or the like, or information input via an input device may be stored in the storage unit 21 or the like.

The reception unit 22 is typically realized using a wireless or wired communication means.

The processing unit 23, the intensity acquisition unit 231, the type judgment unit 232, the movement judgment unit 233, the position acquisition unit 234, the intensity acquisition part 2341, the location determination part 2342, and the position acquisition part 2343 can typically be realized using a processor, a memory, or the like. The processing procedures performed by the processing unit 23 and so on are typically realized using software, and the software is recorded on a recording medium such as a ROM. However, such processing procedures may be realized using hardware (a dedicated circuit). Note that the processor may be a CPU, an MPU, a GPU, or the like, and there is no limitation on the type thereof.

The output unit 24 and the position output unit 241 can be realized using the driver software of the output device such as a display or a speaker, the driver software of the output device and the output device, or the like.

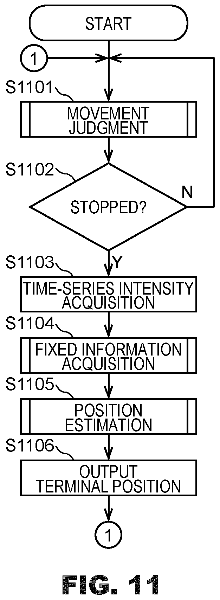

Next, a first operation example of a terminal apparatus 2 will be described with reference to the flowchart in FIG. 11.

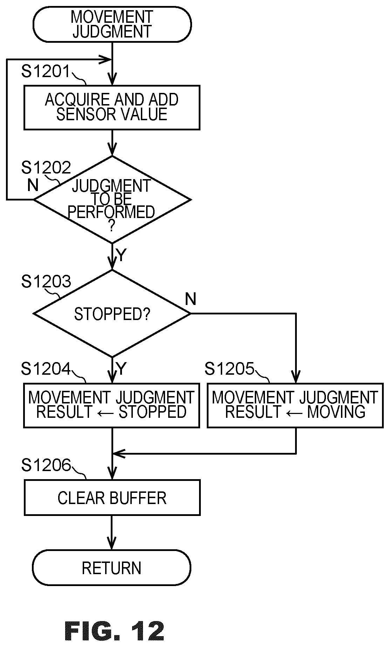

(Step S1101) The movement judgment unit 233 judges whether the terminal apparatus 2 is moving or stopped. An example of such movement judgment processing will be described with reference to the flowchart in FIG. 12.

(Step S1102) If the judgment result in step S1101 is "stopped", processing proceeds to step S1103, and if the judgment result is "moving", processing returns to step S1101.

(Step S1103) The intensity acquisition part 2341 performs time-series intensity acquisition processing. An example of time-series intensity acquisition processing has been described with reference to the flowchart in FIG. 4.

(Step S1104) The type judgment unit 232, the location determination part 2342, and so on perform fixed information acquisition processing. An example of fixed information acquisition processing has been described with reference to the flowchart in FIG. 5.

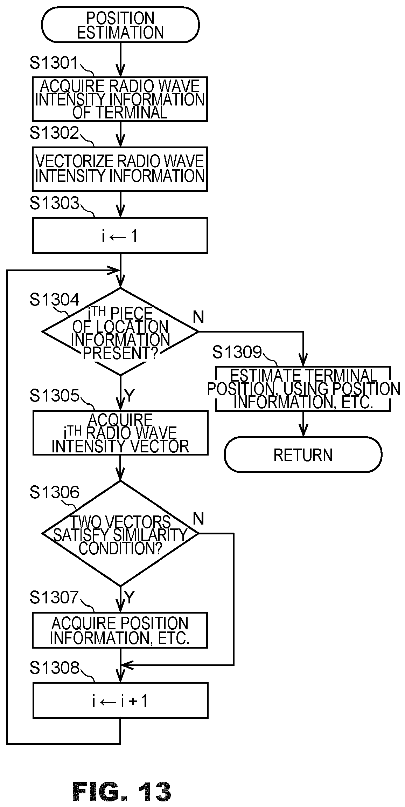

(Step S1105) The position acquisition part 2343 performs position estimation processing to acquire the terminal position. An example of position estimation processing will be described with reference to the flowchart in FIG. 13.

(Step S1106) The position output unit 241 outputs the terminal position acquired in step S1105. Processing returns to step S1101.

Note that, in the flowchart in FIG. 11, processing is terminated when power is turned off or an interruption is made to terminate the processing.

Next, an example of the movement judgment processing in step S1101 will be described with reference to the flowchart in FIG. 12.

(Step S1201) The movement judgment unit 233 acquires a sensor value (for example, acceleration) of the terminal apparatus 2 and temporarily accumulates it in a buffer (not shown).

(Step S1202) The movement judgment unit 233 judges whether or not to perform the movement judgment, using the sensor value in the buffer (not shown). If the movement judgment is to be performed, processing proceeds to step S1203, and if the movement judgment is not to be performed, processing returns to step S1201. The movement judgment unit 233 may always perform the movement judgment, or may perform the movement judgment after a predetermined number of sensor values more have been accumulated in the buffer, or after a predetermined time has elapsed since the acquisition of a sensor value, for example.

(Step S1203) The movement judgment unit 233 judges whether the terminal apparatus 2 is moving or stopped, using the one or more sensor values in the buffer (not shown). If the terminal apparatus 2 is stopped, the processing proceeds to step S1204, and if the terminal apparatus 2 is moving, processing proceeds to step S1205.

(Step S1204) The movement judgment unit 233 acquires the movement judgment result "stopped". Processing proceeds to step S1206.

(Step S1205) The movement judgment unit 233 acquires the movement judgment result "moving".

(Step S1206) The movement judgment unit 233 clears the buffer (not shown). Processing returns to higher level processing.

Next, an example of the position estimation processing in step S1105 will be described with reference to the flowchart in FIG. 13.

(Step S1301) The position acquisition part 2343 acquires three or more pieces of radio wave intensity information (sets of an apparatus identifier and a radio wave intensity) of the terminal apparatus 2.

(Step S1302) The position acquisition part 2343 vectorizes the three or more pieces of radio wave intensity information to acquire a radio wave intensity vector. The radio wave intensity vector is, for example, (the radio wave intensity with the apparatus identifier 1, the radio wave intensity with the apparatus identifier 2, the radio wave intensity with the apparatus identifier 3, ..., the radio wave intensity with the apparatus identifier n).

(Step S1303) The position acquisition part 2343 substitutes 1 for a counter i.

(Step S1304) The position acquisition part 2343 judges whether or not the i^{th} piece of location information is present in the location information storage unit 211. If the i^{th} piece of location information is present, processing proceeds to step S1305, and otherwise processing proceeds to step S1309.

(Step S1305) The position acquisition part 2343 acquires the i^{th} radio wave intensity vector contained in the i^{th} piece of location information from the location information storage unit 211.

(Step S1306) The position acquisition part 2343 acquires the degree of similarity between the radio wave intensity vector acquired in step S1302 and the i^{th} radio wave intensity vector acquired in step S1305. Next, the position acquisition part 2343 judges whether or not the degree of similarity satisfies the similarity condition (for example, the degree of similarity is not less than a threshold value). If the degree of similarity satisfies the similarity condition, processing proceeds to step S1307, and otherwise processing proceeds to step S 1308.

(Step S1307) The position acquisition part 2343 acquires the position information contained in the i^{th} piece of location information and the degree of similarity, and accumulates them in a buffer (not sown).

(Step S1308) The position acquisition part 2343 increments the counter i by 1. Processing returns to step S1304.

(Step S1309) The position acquisition part 2343 acquires the terminal position that specifies the position of the terminal apparatus 2, using three or more sets, each consisting of a piece of position information and a degree of similarity accumulated in the buffer (not shown). Processing returns to higher level processing.

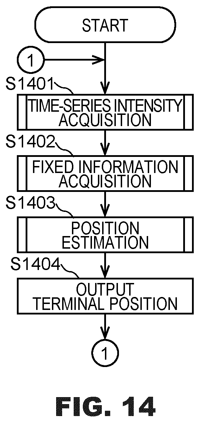

Next, a second operation example of a terminal apparatus 2 will be described with reference to the flowchart in FIG. 14.

(Step S1401) The intensity acquisition part 2341 performs time-series intensity acquisition processing. An example of time-series intensity acquisition processing has been described with reference to the flowchart in FIG. 4.

(Step S1402) The location determination part 2342 performs fixed information acquisition processing. An example of fixed information acquisition processing has been described with reference to the flowchart in FIG. 5.

(Step S1403) The position acquisition part 2343 performs position estimation processing to acquire the terminal position. An example of position estimation processing has been described with reference to the flowchart in FIG. 13.

(Step S1404) The position output unit 241 outputs the terminal position acquired in step S1403. Processing returns to step S1401.

Note that, in the flowchart in FIG. 14, processing is terminated when power is turned off or an interruption is made to terminate the processing.

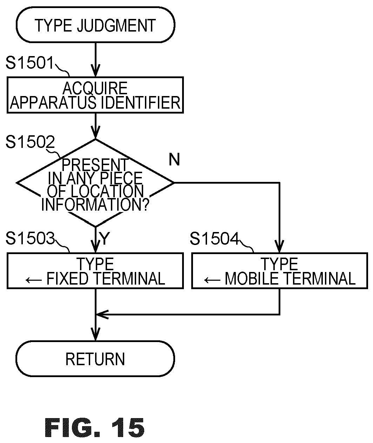

Next, a second example of type judgment processing in the fixed information acquisition processing in step S1402 of the flowchart in FIG. 14 will be described with reference to the flowchart in FIG. 15. The first example of type judgment processing has been described with reference to the flowchart in FIG. 6.

(Step S1501) The type judgment unit 232 acquires the apparatus identifier of the communication apparatus B to be subjected to the type judgment.

(Step S1502) The type judgment unit 232 judges whether or not the apparatus identifier acquired in step S1501 is present in any piece of location information in the location information storage unit 211. If the apparatus identifier is present in any piece of location information, processing proceeds to step S1503, and otherwise processing proceeds to step S1504.

(Step S1503) The type judgment unit 232 judges that the type is "fixed terminal". Processing returns to higher level processing.

(Step S1504) The type judgment unit 232 judges that the type is "mobile terminal". Processing returns to higher level processing.

Hereinafter, examples of specific operations of each terminal apparatus 2 according to the present embodiment will be described.

It is assumed that a user B, holding his/her terminal apparatus 2, enters an indoor location identified by a location identifier (P). It is assumed that the reception unit 22 of the terminal apparatus 2 transmits a location information request containing the location identifier (P) to an external apparatus (not shown), and receives the location information management table shown in FIG. 8 from the apparatus. It is assumed that the processing unit 23 thereafter temporarily accumulates the location information management table in the location information storage unit 211.

The terminal apparatus 2 operates as described below according to the processing from step S1103 to step S1106 in FIG. 11 or the processing in the flowchart in FIG. 14.

That is to say, the intensity acquisition part 2341 performs the time-series intensity acquisition processing described with reference to the flowchart in FIG. 4 to acquire the radio wave intensity of each of the three or more communication apparatuses B at the location X where the terminal apparatus 2 is present, and forms a time series radio wave intensity management table that has the structure shown in FIG. 7.

Next, the intensity acquisition part 2341 performs time series intensity acquisition processing, acquires time-series radio wave intensities of each of the communication apparatuses B that can receive radio waves at the location X, and forms the time-series radio wave intensity management table that has the structure shown in FIG. 7.

Next, with reference to the time-series radio wave intensity management table, the type judgment unit 142 judges whether each communication apparatus B is a "fixed terminal" or a "mobile terminal" according to the type judgment processing described with reference to the flowchart in FIG. 4.

Next, the location determination part 2342 acquires the radio wave intensities of "Apparatus 1", "Apparatus 3", "Apparatus 4", "Apparatus 6", and so on, which have been judged to be fixed terminals. Thereafter, the location determination part 2342 acquires a radio wave intensity vector "the radio wave intensity of the apparatus 1, the radio wave intensity of the apparatus 3, the radio wave intensity of the apparatus 4, the radio wave intensity of the apparatus 6, ...) = (P1,P3,P4,P6, ...). Here, note that the radio wave intensity of each communication apparatus B acquired by the location determination part 2342 may be a representative value of two or more radio wave intensity or one radio wave intensity such as the intensity of the latest radio wave of the communication apparatus B.

Next, the position acquisition part 2343 performs the position estimation processing described with reference to the flowchart in FIG. 13, and calculates the degree of similarity between the radio wave intensity vector at the location X and the radio wave intensity vector (vector constituted by pieces of radio wave intensity information) of each record in FIG. 8. Next, the position acquisition part 2343 determines the radio wave intensity vectors that satisfy the similarity condition "degree of similarity >= threshold value" (for example, the radio wave intensity vector (S₁₁,S₁₂,S₁₃, ...) with "ID = 1", the radio wave intensity vector (S₂₁,S₂₂,S₂₃, ...) with "ID = 2", and so on in FIG. 8). Next, the position acquisition part 2343 acquires sets of position information and a degree of similarity, paired with the radio wave intensity vector that satisfied the similarity condition (for example, "(x₁,y₁),DS₁", "(x₂,y₂),DS₂", and so on). Next, the position acquisition part 2343 acquires the indoor position (x₁ × DS₁ / the sum of the degrees of similarity + x₂ × DS₂ / the sum of the degrees of similarity + ..., y₁ × DS₁ / the sum of the degrees of similarity + y₂ × DS₂ / the sum of the degrees of similarity + ... ) at the location X. Note that the sum of the degrees of similarity is "DS₁ + DS₂ + ...".

Next, the position output unit 241 outputs the indoor or outdoor map stored in the storage unit 21, and places a pattern on the map at a position indicated by the position information (terminal position) acquired by the position acquisition part 2343.

As described above, according to the present embodiment, it is possible to easily acquire the positions of the terminal apparatuses 2 indoors or outdoors.

Note that the processing in the present embodiment may be realized using software. This software may be distributed through software downloading or the like. Also, this software may be recorded on a recording medium such as a CD-ROM and distributed. Note that the same applies to the other embodiments in the present description. Note that the software that realizes each terminal apparatus 2 according to the present embodiment is the program described below. That is to say, this program is a program that enables a computer to function as: a reception unit configured to receive, from each communication apparatus of three or more communication apparatuses, a radio wave containing an apparatus identifier identifying the communication apparatus; an intensity acquisition unit configured to acquire time-series radio wave intensities for each communication apparatus of the three or more communication apparatuses; a type judgment unit configured to judge, for each communication apparatus of the three or more communication apparatuses, whether the communication apparatus is a fixed terminal that is fixed or a mobile terminal that is moving, using the time-series radio wave intensities acquired by the intensity acquisition unit; a position acquisition unit configured to acquire a terminal position that is position information regarding the terminal apparatus, using radio wave intensities of three or more communication apparatuses judged to be fixed terminals by the type judgment unit; and a position output unit configured to output the terminal position acquired by the position acquisition unit.

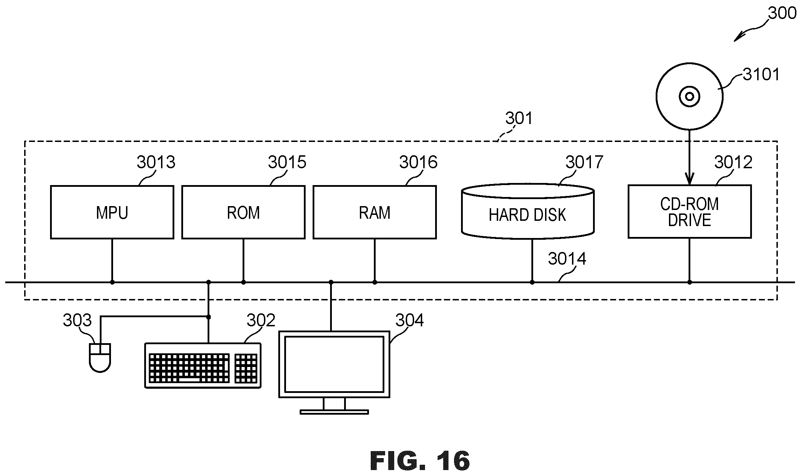

The reference numerals 1 in FIG. 1 and the reference numerals 2 in FIG. 9 each indicate the external appearance of a computer that executes the program described in the present specification to realize the location information production apparatus 1, the terminal apparatuses 2, and so on according to the various embodiments described above. The above-described embodiments can be realized using computer hardware and a computer program executed thereon. The reference numerals 1 in FIG. 1 and the reference numerals 2 in FIG. 9 are overview diagrams for this computer system 300, and FIG. 16 is a block diagram for the system 300.

In FIG. 16, the computer 301 includes, in addition to the CD-ROM drive 3012, an MPU 3013, a bus 3014 that is connected to the CD-ROM drive 3012 and so on, a ROM 3015 for storing programs such as a boot-up program, a RAM 3016 that is connected to the MPU 3013 and is used to temporarily store application program instructions and provide a temporary storage space, and a hard disk 3017 for storing application programs, system programs, and data. Here, although not shown in the figure, the computer 301 may further include a network card that provides connection to a LAN.

The program that enables the computer system 300 to perform the functions of the terminal apparatuses 2 and so on according to the above-described embodiments may be stored in the CD-ROM 3101, inserted into the CD-ROM drive 3012, and furthermore transferred to the hard disk 3017. Alternatively, the program may be transmitted to the computer 301 via a network (not shown) and stored on the hard disk 3017. The program is loaded into the RAM 3016 when the program is to be executed. The program may be directly loaded from the CD-ROM 3101 or the network.

The program does not necessarily have to include an operating system (OS), a third party program, or the like that enables the computer 301 to perform the functions of the terminal apparatuses 2 and so on according to the embodiments described above. The program need only contain the part of the instruction that calls an appropriate function (module) in a controlled manner to achieve a desired result. How the computer system 300 works is well known and the detailed descriptions thereof will be omitted.

In the above-described program, the step of transmitting information, the step of receiving information and so on do not include processing performed by hardware, for example, processing performed by a modem or an interface card in the step of transmitting (processing that can only be performed by hardware).

There may be a single or multiple computers executing the above-described program. That is to say, centralized processing or distributed processing may be performed.

Also, as a matter of course, in each of the above-described embodiments, two or more communication means that are present in one apparatus may be physically realized using one medium.

Also, in the above-described embodiments, each kind of processing may be realized as centralized processing that is performed by a single apparatus, or distributed processing that is performed by multiple apparatuses.

As a matter of course, the present invention is not limited to the above-described embodiments, and various changes are possible, and such variations are also included within the scope of the present invention.

### Industrial Applicability

As described above, the terminal apparatuses 2 according to the present invention have the effect of making it easy to acquire the positions of the terminals, and are useful as terminal apparatuses, etc.

## Claims

1. A terminal apparatus comprising:
a reception unit configured to receive, from each communication apparatus of three or more communication apparatuses, a radio wave containing an apparatus identifier identifying the communication apparatus;
an intensity acquisition unit configured to acquire time-series radio wave intensities for each communication apparatus of the three or more communication apparatuses;
a movement judgment unit configured to judge, by using the time-series radio wave intensities of each of the three or more communication apparatuses acquired by the intensity acquisition unit, that the terminal apparatus is stopped if the time-series radio wave intensities of two or more communication apparatuses have not changed, and to acquire a movement judgment result that is a result of judging whether the terminal apparatus is moving or stopped;
a type judgment unit configured to judge, for each communication apparatus of the three or more communication apparatuses, whether the communication apparatus is a fixed terminal that is fixed or a mobile terminal that is moving, using the time-series radio wave intensities acquired by the intensity acquisition unit;
a position acquisition unit configured to acquire a terminal position that is position information regarding the terminal apparatus, using radio wave intensities of three or more communication apparatuses judged to be fixed terminals by the type judgment unit; and
a position output unit configured to output the terminal position acquired by the position acquisition unit,
wherein the position acquisition unit uses the movement judgment result to acquire the terminal position.

2. The terminal apparatus according to claim 1,
wherein the position acquisition unit acquires the terminal position only when the movement judgment result indicates that the terminal apparatus is "stopped".

3. The terminal apparatus according to claim 1 or 2,
wherein the position acquisition unit includes:
an intensity acquisition part configured to acquire the radio wave intensities of the three or more communication apparatuses judged to be fixed terminals by the type judgment unit, in association with apparatus identifiers thereof;
a location determination part configured to determine one or more pieces of location information that meet radio wave intensities associated with the three or more apparatus identifiers, acquired by the intensity acquisition part, and a similarity condition, from a location information storage unit that stores three or more pieces of location information each containing position information regarding a specific location and radio wave intensities at the specific location for each of apparatus identifiers of two or more fixed terminals; and
a position acquisition part configured to acquire one or more pieces of position information respectively contained in the one or more pieces of location information determined by the location determination part, and to acquire the terminal position, using the one or more pieces of position information.

4. The terminal apparatus according to claim 3,
wherein the three or more pieces of location information in the location information storage unit are pieces of information acquired by a location information production apparatus, and
the location information production apparatus includes:
a position acceptance unit configured to accept position information regarding a specific location;
a reception unit configured to receive, from each communication apparatus of three or more communication apparatuses, a radio wave containing an apparatus identifier identifying the communication apparatus, at the specific location;
an intensity acquisition unit configured to acquire time-series radio wave intensities for each communication apparatus of the three or more communication apparatuses;
a type judgment unit configured to judge, for each communication apparatus of the three or more communication apparatuses, whether the communication apparatus is a fixed terminal that is fixed or a mobile terminal that is moving, using the time-series radio wave intensities acquired by the intensity acquisition unit; and
an accumulation unit configured to form and accumulate location information containing apparatus identifiers and radio wave intensities of three or more communication apparatuses judged to be fixed terminals by the type judgment unit and the position information regarding the specific location.

5. A position acquisition method for a terminal apparatus that includes a reception unit, an intensity acquisition unit, a movement judgment unit, a type judgment unit, a position acquisition unit, and a position output unit, the position acquisition method comprising:
a reception step in which the reception unit receives, from each communication apparatus of three or more communication apparatuses, a radio wave containing an apparatus identifier identifying the communication apparatus;
an intensity acquisition step in which the intensity acquisition unit acquires time-series radio wave intensities for each communication apparatus of the three or more communication apparatuses;
a movement judgment step in which the movement judgment unit, by using the time-series radio wave intensities of each of the three or more communication apparatuses acquired by the intensity acquisition unit, judges that the terminal apparatus is stopped if the time-series radio wave intensities of two or more communication apparatuses have not changed, and acquires a movement judgment result that is a result of judging whether the terminal apparatus is moving or stopped;
a type judgment step in which the type judgment unit judges, for each communication apparatus of the three or more communication apparatuses, whether the communication apparatus is a fixed terminal that is fixed or a mobile terminal that is moving, using the time-series radio wave intensities acquired by the intensity acquisition unit;
a position acquisition step in which the position acquisition unit acquires a terminal position that is position information regarding the terminal apparatus, using radio wave intensities of three or more communication apparatuses judged to be fixed terminals by the type judgment unit; and
a position output step in which the position output unit outputs the terminal position acquired by the position acquisition unit,
wherein the position acquisition unit uses the movement judgment result to acquire the terminal position.

6. A recording medium having recorded thereon a program that enables a computer to function as:
a reception unit configured to receive, from each communication apparatus of three or more communication apparatuses, a radio wave containing an apparatus identifier identifying the communication apparatus;
an intensity acquisition unit configured to acquire time-series radio wave intensities for each communication apparatus of the three or more communication apparatuses;
a movement judgment unit configured to judge, by using the time-series radio wave intensities of each of the three or more communication apparatuses acquired by the intensity acquisition unit, that the terminal apparatus is stopped if the time-series radio wave intensities of two or more communication apparatuses have not changed, and to acquire a movement judgment result that is a result of judging whether the terminal apparatus is moving or stopped;
a type judgment unit configured to judge, for each communication apparatus of the three or more communication apparatuses, whether the communication apparatus is a fixed terminal that is fixed or a mobile terminal that is moving, using the time-series radio wave intensities acquired by the intensity acquisition unit; and
a position acquisition unit configured to acquire a terminal position that is position information regarding the terminal apparatus, using radio wave intensities of three or more communication apparatuses judged to be fixed terminals by the type judgment unit; and
a position output unit configured to output the terminal position acquired by the position acquisition unit,
wherein the position acquisition unit uses the movement judgment result to acquire the terminal position.
